# FASCICULE DE BREVET EUROPEEN

(11) **EP 4 303 667 B1**
(45) Date de publication et mention de la délivrance du brevet: **27.08.2025**
(21) Numéro de dépôt: 22183365.0
(22) Date de dépôt: 06.07.2022
(51) Int. Cl.: G04C 10/00, G04G 19/00

(54) **DISPOSITIF DE GÉNÉRATION D'ÉNERGIE ÉLECTRIQUE POUR PIÈCE D'HORLOGERIE**
VORRICHTUNG ZUR ERZEUGUNG VON ELEKTRISCHER ENERGIE FÜR EINE UHR
DEVICE FOR GENERATING ELECTRICAL ENERGY FOR A TIMEPIECE

(43) Date de publication de la demande: 10.01.2024
(73) Titulaire: The Swatch Group Research and Development Ltd, 2074 Marin (CH)
(72) Inventeur: TORTORA, Pierpasquale, 2000 Neuchâtel (CH); NICOLAS, Cédric, 2000 Neuchâtel (CH); BORN, Jean-Jacques, 1110 Morges (CH); MAUREL, Arnaud, 2115 Buttes (CH)
(74) Mandataire: ICB SA

(56) Documents cités:
- GB-A- 2 262 988
- JP-A- 2001 329 944
- JP-A- H 116 883
- JP-A- S5 342 773
- US-A- 4 644 246
- US-A- 5 614 779
- US-A- 5 923 619

## Description

### Domaine technique de l'invention

L'invention concerne un dispositif de génération à durée limitée d'énergie pour une pièce d'horlogerie, comportant un organe de manœuvre manœuvrable par un utilisateur à l'encontre d'au moins un moyen de rappel élastique, lequel au moins un moyen de rappel élastique est agencé pour entraîner indirectement au moins une génératrice électrique pour générer un courant électrique pendant une durée limitée.

L'invention concerne encore une pièce d'horlogerie comportant au moins une génératrice électrique pour l'alimentation électrique d'au moins un circuit, comportant au moins un tel dispositif de génération à durée limitée d'énergie. L'invention concerne le domaine de la génération d'énergie électrique pour l'alimentation de fonctions électriques dans une pièce d'horlogerie, notamment une montre.

### Arrière-plan technologique

De nombreuses pièces d'horlogerie, notamment des montres, sont équipées de fonctions lumineuses, activables à la demande. De telles fonctions peuvent présenter un caractère fonctionnel, comme le rétro-éclairage d'un afficheur, d'un cadran, ou autre, ou encore un caractère plus ludique comme l'affichage d'images, de logos, voire d'hologrammes. Un système d'éclairage comporte usuellement principalement une source d'énergie électrique, une ou plusieurs sources de lumière (LED, OLED, électroluminescent, ou autre), et un système électronique de contrôle (composants passifs, dispositif de gestion de durée dit timer, élévateur de tension, pour ne citer que les principaux).

Les composants d'un tel système d'éclairage sont volumineux, et lourds, ce qui est pénalisant dans le cas d'une montre. En particulier, la source d'énergie électrique peut être, soit une pile primaire, une pile rechargeable, ou un accumulateur de charges qui ont été produites au préalable dans un système tel qu'une cellule photovoltaïque, thermoélectrique ou piézoélectrique. Une électronique de contrôle est en général prévue afin d'activer l'éclairage, et en définir la durée. Il est très rare que l'utilisateur aie à éteindre lui-même l'éclairage.

La plupart de ces dispositifs sont issus de l'industrie électronique. Ils sont constitués de composants chimiques (électrolytes dans les piles), ainsi que polymériques (paquetage, guide de lumière, circuits imprimés). Ces types de matériaux sont généralement bannis des montres mécaniques d'une certaine gamme, car ils ont tendance à se détériorer avec le temps. Cela peut engendrer des dégâts esthétiques (changement de couleur, taches), ou, pire encore, des débris circulant à l'intérieur de la montre.

La problématique est la même pour d'autres circuits récepteurs que des circuits d'éclairage, notamment pour la génération de sons, ou encore de signaux permettant le franchissement de passages sécurisés, ou autre.

Le document JP-S53-42773A divulgue un dispositif horloger de génération d'énergie à durée limitée.

### Résumé de l'invention

L'invention se propose de simplifier la génération de courant électrique dans une pièce d'horlogerie, notamment une montre, en éliminant des circuits et systèmes susceptibles de générer une pollution fonctionnelle et/ou visuelle dans la pièce d'horlogerie et d'en altérer la valeur et/ou le fonctionnement.

A cet effet, l'invention a pour but de permettre à l'utilisateur de générer lui-même la quantité juste nécessaire d'énergie électrique, pendant une durée limitée et pré-déterminée, en agissant sur un organe de manœuvre externe à la pièce d'horlogerie, tel qu'une lunette ou similaire, pour activer une fonction électrique, par exemple et non limitativement lumineuse.

L'organe de manœuvre est conçu pour entraîner une génératrice électrique, notamment une micro-génératrice électromagnétique, pendant un certain temps, afin d'alimenter en courant électrique un ou plusieurs circuits électriques utilisateurs. Cette fonction est exercée sans recourir à un système d'accumulation de charges électriques, ni à un dispositif de temporisation électronique, ce qui permet de réduire l'encombrement, la masse, et le coût du dispositif.

Ainsi, à cet effet, l'invention concerne un dispositif de génération à durée limitée d'énergie pour une pièce d'horlogerie, comportant un organe de manœuvre manœuvrable par un utilisateur à l'encontre d'au moins un moyen de rappel élastique, lequel au moins un moyen de rappel élastique est agencé pour entraîner indirectement au moins une génératrice électrique pour générer un courant électrique pendant une durée limitée, selon la revendication 1.

L'invention concerne encore une pièce d'horlogerie comportant au moins une génératrice électrique pour l'alimentation électrique d'au moins un circuit, comportant au moins un tel dispositif de génération à durée limitée d'énergie.

### Brève description des figures

Les buts, avantages et caractéristiques de l'invention apparaîtront mieux à la lecture de la description détaillée qui va suivre, en référence aux dessins annexés, où :

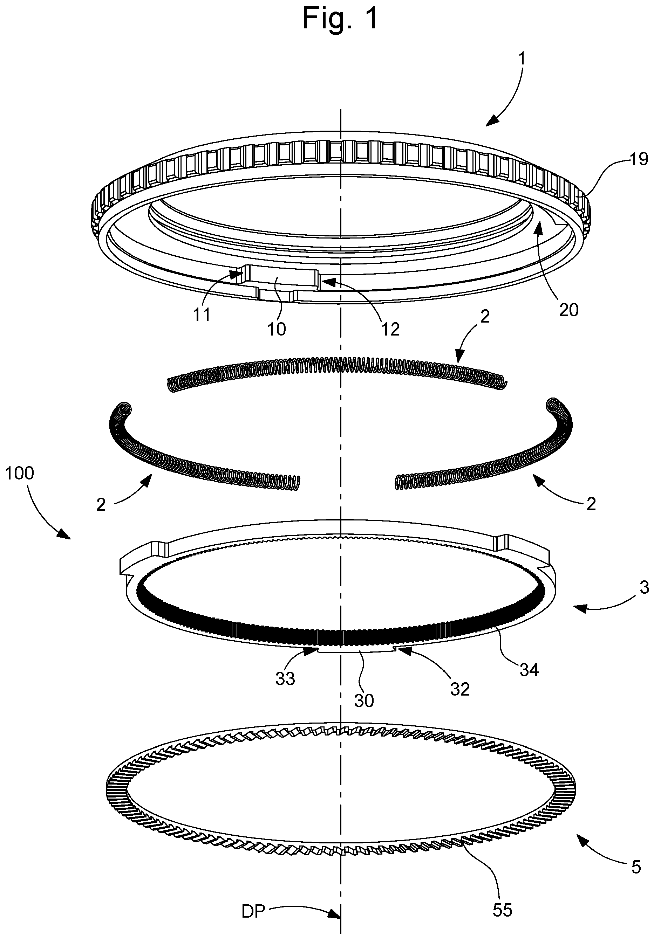

- la figure 1 représente, en perspective éclatée, les organes de commande d'un dispositif selon l'invention, dans le cas particulier et non limitatif d'un mécanisme rotatif, avec, disposés coaxialement autour d'un axe principal, de haut en bas :
   - un organe de manœuvre, constitué par une lunette de montre dans ce cas particulier non limitatif, comportant une série de gorges en secteurs annulaires, séparées par des ergots internes saillant vers l'axe, chacune de ces gorges constituant une chambre pour la réception d'un moyen de rappel élastique, ici un ressort hélicoïdal dans ce cas particulier non limitatif ;
   - un ensemble de plusieurs tels moyens de rappel élastique, ici au nombre de trois dans cet exemple particulier ;
   - un organe denté, comportant des ergots externes saillant extérieurement, agencés pour retenir les ressorts dans leurs chambres et les y comprimer, et comportant une denture intérieure périphérique, prévue pour l'entraînement d'un pignon d'engrenage ou d'un composant similaire d'un rouage d'entraînement d'une génératrice électrique ;
   - une bague crantée fixée à l'organe de manœuvre supérieur, comportant une denture asymétrique, et agencée pour coopérer avec des cliquets non représentés, montés sur une structure de la pièce d'horlogerie, pour garantir un mouvement unidirectionnel de l'organe de manœuvre, et son freinage en position ;

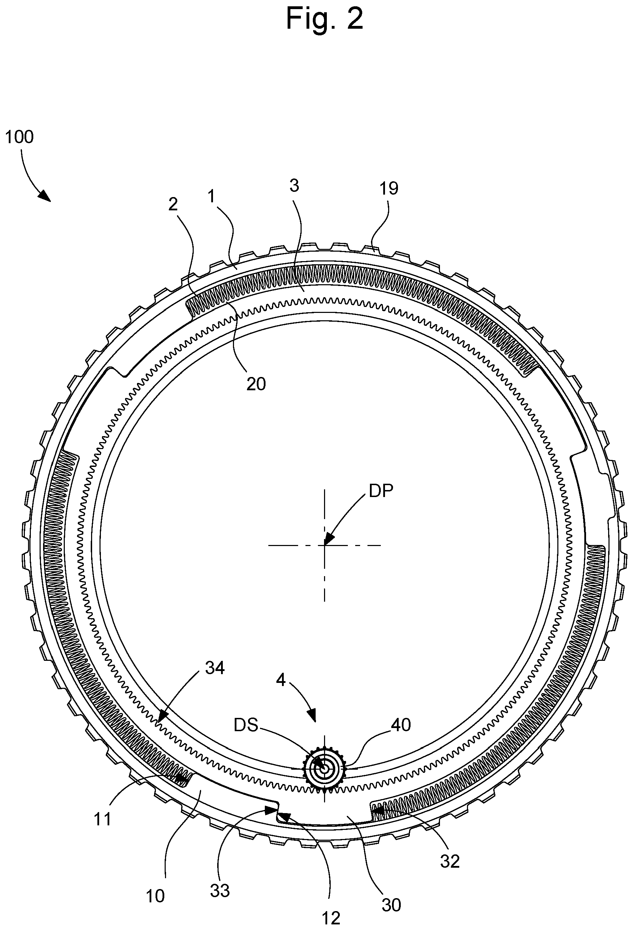

- la figure 2 représente, en vue de dessous, les organes de commande de la figure 1, avec l'organe denté engrenant avec un pignon d'engrenage que comporte le rouage d'entraînement de la génératrice électrique. Les ressorts sont dans une position de repos où ils sont pré-armés, chacun s'étend entre un ergot interne de l'organe de manœuvre supérieur, et un ergot externe de l'organe denté intérieur ; chaque ergot interne de l'organe de manœuvre supérieur est en appui sur un ergot externe de l'organe denté intérieur ;

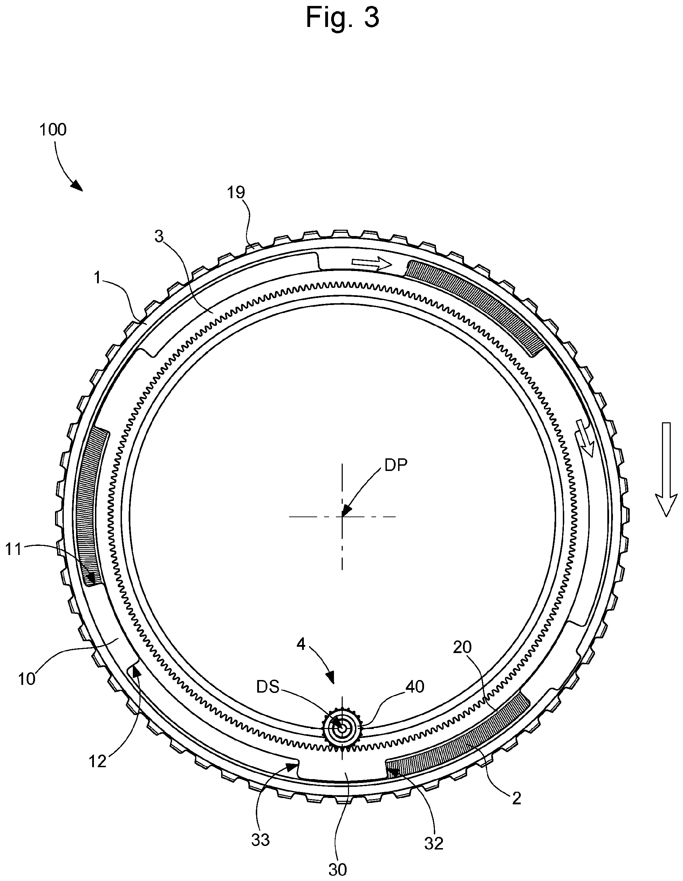

- la figure 3 représente, de façon similaire à la figure 2, le même ensemble, après une première course angulaire appliquée à l'organe de manœuvre, tandis que l'organe denté et le pignon d'engrenage sont maintenus à l'arrêt par le couple résistant du rouage d'alimentation de la génératrice électrique ;

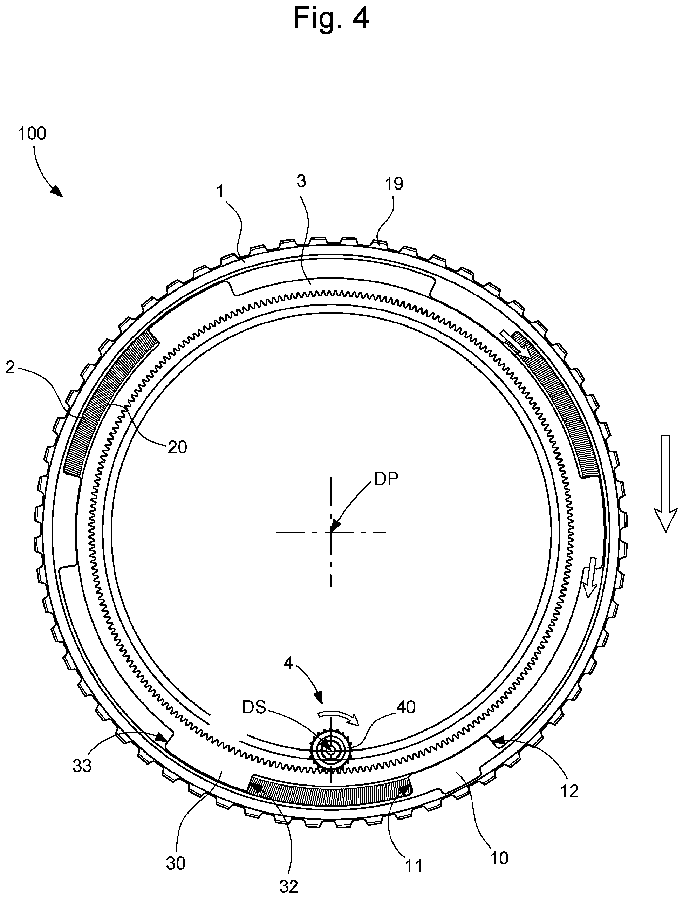

- la figure 4 représente, de façon similaire aux figures 2 et 3, le même ensemble, après une deuxième course angulaire appliquée à l'organe de manœuvre, ayant pour effet de comprimer encore les ressorts et de vaincre le couple résistant du rouage d'alimentation de la génératrice électrique; l'organe denté et le pignon d'engrenage sont entraînés en rotation, permettant l'activation de la génératrice électrique au travers du rouage;

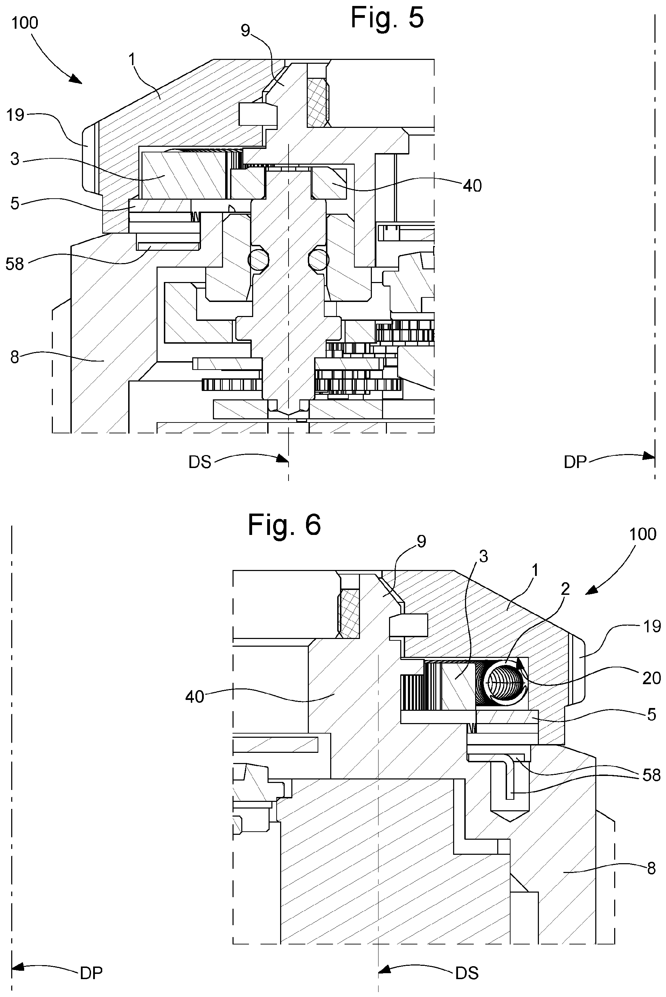

- la figure 5 représente, de façon schématisée et en coupe passant par l'axe principal et par l'axe secondaire du pignon d'engrenage, dans la position à six heures de la figure 4, le dispositif de génération à durée limitée d'énergie selon l'invention;
- la figure 6 représente, de façon schématisée et en coupe passant par l'axe principal, dans la position à une heure de la figure 4, le dispositif de génération à durée limitée d'énergie selon l'invention;

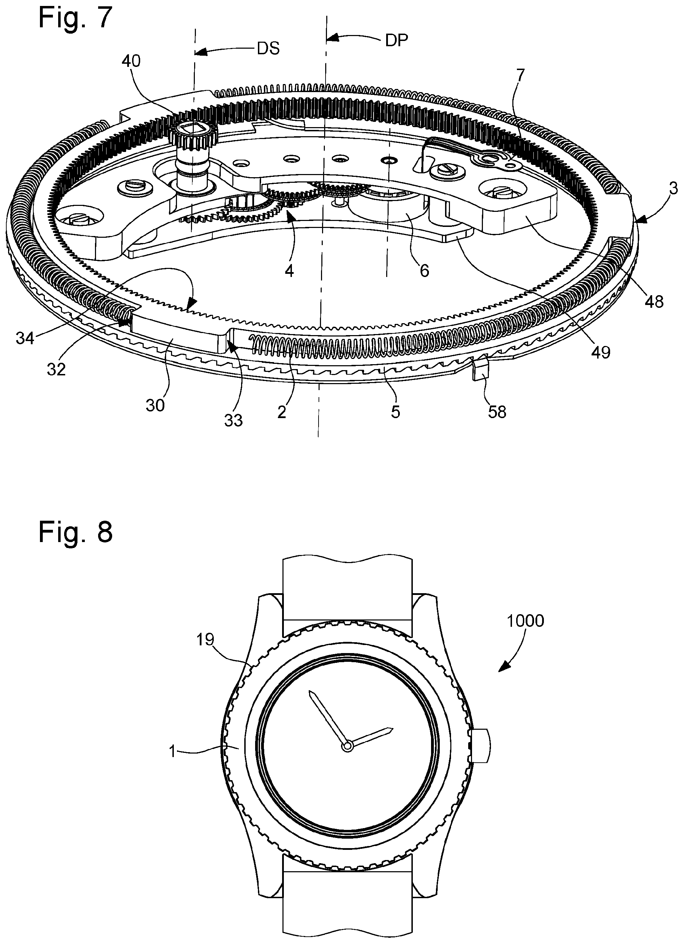

- la figure 7 représente, de façon schématisée et en perspective, une partie du dispositif de génération à durée limitée d'énergie selon l'invention, avec l'organe denté engrenant avec le pignon d'engrenage, et le rouage d'activation de la génératrice électrique disposés entre une semelle et un pont, et un circuit utilisateur ;
- la figure 8 représente, de façon schématisée et de face, une montre comportant un organe de manœuvre pour la commande d'un dispositif de génération à durée limitée d'énergie selon l'invention.

### Description détaillée de l'invention

L'invention concerne un dispositif de génération à durée limitée d'énergie 100 pour une pièce d'horlogerie 1000.

Ce dispositif 100 comporte un organe de manœuvre 1, qui est manœuvrable par un utilisateur à l'encontre d'au moins un moyen de rappel élastique 2. Cet au moins un moyen de rappel élastique 2 est agencé pour entraîner indirectement au moins une génératrice électrique 6, pour générer un courant électrique pendant une durée limitée.

De façon avantageuse, cette génératrice électrique 6 est une micro-génératrice électromagnétique.

Selon l'invention, le dispositif 100 comporte un organe denté 3, qui est mobile avec un degré de liberté par rapport à l'organe de manœuvre 1, et qui délimite avec cet organe de manœuvre 1 une chambre 20 séparée pour la réception de chaque moyen de rappel élastique 2. Ce moyen de rappel élastique 2 est maintenu comprimé dans sa chambre 20 entre une position de repos pré-armé et une position de compression maximale, entre d'une part une première butée d'appui 11 que comporte l'organe de manœuvre 1 et d'autre part une deuxième butée d'appui 32 que comporte l'organe denté 3. Et l'organe denté 3 est agencé pour être entraîné par cet au moins un moyen de rappel élastique 2 pour entraîner la génératrice électrique 6, directement ou indirectement au travers d'un rouage 4.

Plus particulièrement, en l'absence d'action d'un utilisateur sur l'organe de manœuvre 1, et en l'absence de détente de cet au moins un moyen de rappel élastique 2, le dispositif 100 occupe une position d'attente dans laquelle l'organe denté 3 est en position de butée contre l'organe de manœuvre 1, et chaque moyen de rappel élastique 2 est dans la position de repos pré-armé dans sa chambre 20 respective.

Plus particulièrement, l'organe de manœuvre 1 comporte une première butée de repos 12, et l'organe denté 3 comporte une deuxième butée de repos 33, qui est agencée pour coopérer en appui avec la première butée de repos 12 dans la position de repos du au moins un moyen de rappel élastique 2.

Plus particulièrement, la première butée d'appui 11 est portée par un premier ergot 10 que comporte l'organe de manœuvre 1, et la deuxième butée d'appui 32 est portée par un deuxième ergot 30 que comporte l'organe denté 3.

Plus particulièrement, la première butée de repos 12 est portée par le premier ergot 10 que comporte l'organe de manœuvre 1, et la deuxième butée de repos 33 est portée par le deuxième ergot 30.

Plus particulièrement, le dispositif 100 comporte un mécanisme anti-retour, qui est agencé pour interdire, dans la position d'attente, l'entraînement de l'organe de manœuvre 1 par le au moins un moyen de rappel élastique 2.

Plus particulièrement, ce mécanisme anti-retour comporte au moins une bague crantée 5 s'opposant, dans la position d'attente, à l'entraînement de l'organe de manœuvre 1 par au moins un moyen de rappel élastique 2. De façon avantageuse, cette bague crantée 5 est analogue à celles utilisées sur les montres de plongée, et est une bague crantée à dents de loup 55, et est montée solidaire de l'organe de manœuvre 1, notamment une lunette, qui ne peut avoir qu'un mouvement unidirectionnel. Ce crantage 55 coopère avec des cliquets 58 portés par un élément de structure 8 que comporte la pièce d'horlogerie 1000, notamment une carrure.

Plus particulièrement, le au moins un moyen de rappel élastique 2 est agencé pour, lors d'un arrêt d'entraînement de l'organe de manœuvre 1 par l'utilisateur, repousser l'organe denté 3 par rapport à l'organe de manœuvre 1, et regagner sa propre position de repos.

Plus particulièrement, au moins un moyen de rappel élastique 2 est un ressort hélicoïdal agencé pour travailler en compression. D'autres exécutions sont imaginables, par exemple un ressort spiral.

Plus particulièrement, l'organe de manœuvre 1, le au moins un moyen de rappel élastique 2, et l'organe denté 3, sont mobiles en rotation autour d'un axe principal DP commun.

Plus particulièrement, l'organe de manœuvre 1 est une lunette mobile par rapport à une carrure 8, 9.

Dans une variante non illustrée, l'organe de manœuvre 1 est une targette, ou un poussoir, ou similaire.

Plus particulièrement, l'organe denté 3 comporte une surface dentée 34 qui est agencée pour coopérer avec un pignon d'engrenage 40, mobile en rotation autour d'un axe secondaire DS, et que comporte le rouage 4, pour entraîner la génératrice électrique 6, lorsque l'organe denté 3 est entraîné par un moyen de rappel élastique 2. La figure 7 illustre une configuration non limitative où le pignon d'engrenage 40, le rouage 4, la génératrice électrique 6, sont disposés entre une semelle 49 et un pont 48, où les mobiles sont pivotés ; la semelle 49 peut être la carrure, ou la platine, ou autre.

On comprend que la génératrice électrique 6 oppose un couple résistant à la rotation du pignon d'engrenage 40, ce couple résistant dépend en particulier du ou des circuits électriques 7 utilisateurs du courant électrique généré par la génératrice électrique 6, et ce couple résistant n'est en général pas constant, mais évolutifs au fur et à mesure de la génération du courant. Il survient un instant où le couple moteur exercé par l'ensemble des moyens de rappel élastique 2 est supérieur à ce couple résistant, ce qui permet la détente des moyens de rappel élastique 2, et leur retour vers leur position de repos ; la durée de cette détente correspond à une durée limitée et pré-déterminée de fourniture de courant électrique propre au dispositif 100, en l'absence de poursuite de mouvement par l'utilisateur. Naturellement, si l'utilisateur poursuit l'entraînement de l'organe de manœuvre 1, celui-ci pousse les moyens de rappel élastique 2 et par conséquent l'organe denté 3, et entraîne le pignon d'engrenage 40; mais, dès que l'utilisateur cesse son mouvement d'entraînement, seuls les moyens de rappel élastique 2 sont moteurs, pendant cette durée limitée pré-déterminée.

Le pignon d'engrenage 40 peut, quant à lui, être entraîné en sens horaire ou anti-horaire, et alimenter la génératrice électrique 6 de la même façon. On comprend que la génératrice électrique 6 fonctionne quel que soit le sens d'entraînement; mais, pour que le système de stockage d'énergie dans les moyens de rappel élastique 2 fonctionne, il faut limiter l'entraînement de l'organe de manœuvre 1 à un seul sens, donc en pratique le pignon d'engrenage 40 ne sera entraîné que dans ce sens, lequel peut être choisi indépendamment lors de la fabrication de la montre. C'est pourquoi la variante illustrée comportant une lunette unidirectionnelle 1 avec une bague crantée 5 anti-retour et un cliquet 58 convient bien à la mise en œuvre de l'invention.

L'invention concerne encore une pièce d'horlogerie 1000 comportant au moins une génératrice électrique 6 pour l'alimentation électrique d'au moins un circuit 7. Selon l'invention, la pièce d'horlogerie 1000 comporte au moins un tel dispositif de génération à durée limitée d'énergie 100, qui est agencé pour l'entraînement de la au moins une génératrice électrique 6. Le dimensionnement du ou des circuits 7, et la nature des composants récepteurs d'énergie, tels que LED, OLED, émetteurs sonores, émetteurs de signal, ou autre, détermine directement le couple résistant opposé à l'entraînement du pignon d'engrenage 40, et donc le seuil de la course motrice des moyens de rappel élastique 2, et donc la durée limitée pré-déterminée de fourniture de courant.

De façon avantageuse, l'invention permet de s'affranchir de tout système électronique de gestion d'énergie, ainsi que de moyens de stockage d'énergie électrique.

Plus particulièrement, la pièce d'horlogerie 1000 est dépourvue de moyen d'accumulation d'énergie électrique.

Plus particulièrement, la pièce d'horlogerie 1000 est une montre.

Les figures illustrent une réalisation particulière, non limitative, dans laquelle la pièce d'horlogerie 1000 est une montre, et l'organe de manœuvre 1 est une lunette de commande rotative unidirectionnelle. Ce concept de lunette de montre permet l'activation d'une micro-génératrice magnétique 6. En tournant la lunette constituant l'organe de manœuvre 1, l'utilisateur active un système de ressorts, constituant chacun un moyen de rappel élastique 2. L'énergie stockée dans ces ressorts est utilisée pour mettre en rotation, à un certain stade, un système d'engrenages constituant le rouage 4 relié à la micro-génératrice magnétique 6. La puissance électrique générée par la micro-génératrice magnétique 6 est utilisée pour alimenter en courant le circuit récepteur 7, par exemple une source de lumière. La durée de l'éclairage est alors déterminée par le temps nécessaire aux ressorts 2 pour revenir dans leur position de repos, correspondant à la figure 2.

La figure 1 montre les composants du mécanisme de commande, dans un cas particulier non limitatif avec trois ressorts 2 intercalés entre trois ergots internes 10 de l'organe de manœuvre 1 et trois ergots externes 30 de l'organe denté 3.

La figure 2 montre la position au repos, en l'absence d'action de l'utilisateur, la lunette 1 est maintenue en position par des cliquets 58 coopérant avec la bague crantée à dents de loup 55. Les trois ergots internes 10 de l'organe de manœuvre 1 sont en appui de butée sur les trois ergots externes 30 de l'organe denté 3, respectivement par des premières butées de repos 12 en contact avec des deuxièmes butées de repos 33. Dans cette position de repos, chaque ressort 2 est déjà pré-armé, c'est-à-dire partiellement comprimé. La surface dentée intérieure 34 de l'organe denté 3 engrène avec le pignon d'engrenage 40 appartenant au rouage 4 d'entraînement de la micro-génératrice magnétique 6.

La figure 3 montre la position de l'ensemble après une première rotation de la lunette 1 : les ergots internes 10 ont commencé à comprimer les ressorts 2; la bague crantée 5 empêche la lunette 1 de revenir en arrière sous la réaction des ressorts 2.

L'organe denté 3 reste initialement dans sa position de repos, jusqu'à ce que la pression des ressorts 2 lui permette de vaincre le couple statique du système d'engrenage et de la micro-génératrice, tel que visible sur la figure 4, où le mécanisme est libéré. A partir de ce moment, l'organe denté 3 entraîne le système, permettant à la micro-génératrice magnétique 6 de tourner, avec une vitesse qui dépend du facteur multiplicatif du rouage 4.

En rotation, le couple de la micro-génératrice magnétique 6 dépend du courant généré. Dans le cas d'une connexion directe entre la micro-génératrice magnétique 6 et un circuit utilisateur 7 comportant par exemple une LED, on peut donc paramétrer une courbe de la luminosité en fonction de la durée de la rotation.

Selon l'application, la puissance absorbée par un système d'éclairage pour une montre peut varier entre 3 mW et 15 mW. Pour une application horlogère, il est souhaitable que la durée d'éclairage soit au moins de 3 secondes.

Pour une système tel qu'illustré par les figures, on peut atteindre ces valeurs avec des ressorts 2 de raideur comprise entre 0,025 et 0,050 N/mm, plus particulièrement entre 0,035 et 0,040 N/mm, avec un coefficient multiplicatif du rouage 4 compris entre 1400 et 1900, plus particulièrement entre 1600 et 1700, un couple statique de la micro-génératrice 6 compris entre 8 et 14 µN.m, plus particulièrement entre 10 et 12 µN.m, et un couple de démarrage de la couronne compris entre 0,020 et 0,036 N.m, plus particulièrement entre 0,025 et 0,030 N.m.

En somme, l'invention permet de fournir une solution compacte et économique au problème de la génération de courant électrique pour une fonction annexe d'une pièce d'horlogerie, notamment d'une montre, sans nécessiter de stockage d'énergie ni d'électronique de stabilisation. La transformation de composants existants sur des montres à lunette tournante se limite à l'usinage des gorges faisant chambres 20 et des ergots intérieurs 10 dans la lunette 1, à la réutilisation de la bague crantée à dents de loup 55 et des cliquets 58 associés, sans modification de la carrure à ce niveau, de l'ajout d'un organe denté 3 de géométrie simple, et de ressorts 2 issus du négoce, ainsi que d'un pignon d'engrenage 40, les seules modification de la carrure concernant le logement de l'organe denté 3, et l'implantation de ce pignon 40 et des éléments du rouage 4 connus par ailleurs. L'organe denté 3 pouvant être inséré dans l'épaisseur de la lunette 1, l'épaisseur totale de la montre n'est que peu affectée par son équipement avec un tel dispositif 100, dans le cas où le dispositif 100 est conçu comme un mécanisme additionnel pour une montre existante. Naturellement il est possible de concevoir un calibre qui intègre directement les éléments du rouage 4 ainsi que la micro-génératrice 6 et le circuit utilisateur 7 (flex, LED, ou autre, notamment électronique), sans augmentation dimensionnelle de la carrure.

## Revendications

1. Dispositif de génération à durée limitée d'énergie (100) pour une pièce d'horlogerie (1000), comportant un organe de manœuvre (1) manœuvrable par un utilisateur à l'encontre d'au moins un moyen de rappel élastique (2), lequel au moins un moyen de rappel élastique (2) est agencé pour entraîner indirectement au moins une génératrice électrique (6) pour générer un courant électrique pendant une durée limitée, dans lequel ledit dispositif (100) comporte un organe denté (3) mobile avec un degré de liberté par rapport audit organe de manœuvre (1) et délimitant avec ledit organe de manœuvre (1) une chambre (20) séparée pour la réception de chaque dit moyen de rappel élastique (2), lequel dit moyen de rappel élastique (2) est maintenu comprimé dans sa dite chambre (20) entre une position de repos pré-armé et une position de compression maximale, entre d'une part une première butée d'appui (11) que comporte ledit organe de manœuvre (1) et d'autre part une deuxième butée d'appui (32) que comporte ledit organe denté (3), et dans lequel ledit organe denté (3) est agencé pour être entraîné par ledit au moins un moyen de rappel élastique (2) pour entraîner ladite génératrice électrique (6) directement ou indirectement au travers d'un rouage (4), **caractérisé en ce que** ledit organe de manœuvre (1), ledit au moins un moyen de rappel élastique (2), et ledit organe denté (3), sont mobiles en rotation autour d'un axe principal (DP) commun et **en ce que** ledit organe de manœuvre (1) est une lunette mobile par rapport à une carrure (8, 9).

2. Dispositif de génération à durée limitée d'énergie (100) selon la revendication 1, **caractérisé en ce que**, en l'absence d'action d'un utilisateur sur ledit organe de manœuvre (1), et en l'absence de détente dudit au moins un moyen de rappel élastique (2), ledit dispositif (100) occupe une position d'attente dans laquelle ledit organe denté (3) est en position de butée par contre ledit organe de manœuvre (1), et chaque dit moyen de rappel élastique (2) est dans ladite position de repos pré-armé dans sa dite chambre (20) respective.

3. Dispositif de génération à durée limitée d'énergie (100) selon la revendication 1 ou 2, **caractérisé en ce que** ledit organe de manœuvre (1) comporte une première butée de repos (12), et **en ce que** ledit organe denté (3) comporte une deuxième butée de repos (33) qui est agencée pour coopérer en appui avec ladite première butée de repos (12) dans ladite position de repos dudit au moins un moyen de rappel élastique (2).

4. Dispositif de génération à durée limitée d'énergie (100) selon l'une des revendications 1 à 3, **caractérisé en ce que** ladite première butée d'appui (11) est portée par un premier ergot (10) que comporte ledit organe de manœuvre (1) et **en ce que** ladite deuxième butée d'appui (32) est portée par un deuxième ergot (30) que comporte ledit organe denté (3).

5. Dispositif de génération à durée limitée d'énergie (100) selon les revendications 3 et 4, **caractérisé en ce que** ladite première butée de repos (12) est portée par ledit premier ergot (10) que comporte ledit organe de manœuvre (1) et **en ce que** ladite deuxième butée de repos (33) est portée par ledit deuxième ergot (30).

6. Dispositif de génération à durée limitée d'énergie (100) selon l'une des revendications 1 à 5 et selon la revendication 2, **caractérisé en ce que** ledit dispositif (100) comporte un mécanisme anti-retour agencé pour interdire, dans ladite position d'attente, l'entraînement dudit organe de manœuvre (1) par ledit au moins un moyen de rappel élastique (2).

7. Dispositif de génération à durée limitée d'énergie (100) selon la revendication 6, **caractérisé en ce que** ledit mécanisme anti-retour comporte au moins une bague crantée (5) s'opposant, dans ladite position d'attente, à l'entraînement dudit organe de manœuvre (1) par ledit au moins un moyen de rappel élastique (2).

8. Dispositif de génération à durée limitée d'énergie (100) selon l'une des revendications 1 à 7, **caractérisé en ce que** ledit au moins un moyen de rappel élastique (2) est agencé pour, lors d'un arrêt d'entraînement dudit organe de manœuvre (1) par l'utilisateur, repousser ledit organe denté (3) par rapport audit organe de manœuvre (1), et regagner sa propre dite position de repos.

9. Dispositif de génération à durée limitée d'énergie (100) selon l'une des revendications 1 à 8, **caractérisé en ce que** ledit au moins un moyen de rappel élastique (2) est un ressort hélicoïdal agencé pour travailler en compression.

10. Dispositif de génération à durée limitée d'énergie (100) selon l'une des revendications 1 à 9, **caractérisé en ce que** ledit organe denté (3) comporte une surface dentée (34) agencée pour coopérer avec un pignon d'engrenage (40), mobile en rotation autour d'un axe secondaire (DS), et que comporte ledit rouage (4), pour entraîner ladite génératrice électrique (6), lorsque ledit organe denté (3) est entraîné par ledit au moins un moyen de rappel élastique (2).

11. Pièce d'horlogerie (1000) comportant au moins une génératrice électrique (6) pour l'alimentation électrique d'au moins un circuit (7), **caractérisée en ce que** ladite pièce d'horlogerie (1000) comporte au moins un dispositif de génération à durée limitée d'énergie (100) selon l'une des revendications 1 à 10, agencé pour l'entraînement de ladite au moins une génératrice électrique (6).

12. Pièce d'horlogerie (1000) selon la revendication 11, **caractérisée en ce que** ladite pièce d'horlogerie (1000) est dépourvue de moyen d'accumulation d'énergie électrique.

13. Pièce d'horlogerie (1000) selon la revendication 11 ou 12, **caractérisée en ce que** ladite pièce d'horlogerie (1000) est une montre.

## Patentansprüche

1. Energieerzeugungsvorrichtung (100) mit begrenzter Laufzeit für ein Uhrwerk (1000), umfassend ein Betätigungselement (1), das von einem Benutzer gegen mindestens ein elastisches Rückstellelement (2) betätigt werden kann, wobei dieses mindestens eine Rückstellelement (2) so ausgelegt ist, dass es indirekt mindestens eine elektrische Generatoreinheit (6) zum Erzeugen eines elektrischen Stroms über eine begrenzte Zeit antreibt. Die Vorrichtung (100) umfasst ein Zahnsegment (3), das gegenüber dem Betätigungselement (1) mit einem Freiheitsgrad beweglich ist und zusammen mit diesem eine separate Kammer (20) zur Aufnahme des jeweiligen elastischen Rückstellelements (2) bildet. Dieses Rückstellelement (2) wird in seiner Kammer (20) zwischen einer vorgespannten Ruheposition und einer maximalen Kompressionsstellung gehalten, begrenzt durch einen ersten Anschlag (11) am Betätigungselement (1) und einen zweiten Anschlag (32) am Zahnsegment (3). Das Zahnsegment (3) ist so ausgelegt, dass es durch das Rückstellelement (2) angetrieben wird, um die elektrische Generatoreinheit (6) direkt oder indirekt über ein Zahnradgetriebe (4) anzutreiben. Dabei sind das Betätigungselement (1), das mindestens eine Rückstellelement (2) sowie das Zahnsegment (3) um eine gemeinsame Hauptachse (DP) drehbar gelagert, wobei das Betätigungselement (1) eine gegenüber dem Gehäusemittelteil (8, 9) bewegliche Lünette ist.

2. Energieerzeugungsvorrichtung (100) mit begrenzter Laufzeit nach Anspruch 1, **dadurch gekennzeichnet, dass** die Vorrichtung (100) in einer Warteposition verbleibt, wenn weder eine Benutzeraktion auf das Betätigungselement (1) erfolgt noch das mindestens eine elastische Rückstellelement (2) entspannt ist, wobei sich das Zahnsegment (3) dabei in einer Anschlagstellung gegenüber dem Betätigungselement (1) befindet und jedes Rückstellelement (2) sich in seiner jeweiligen Kammer (20) in der vorgespannten Ruheposition befindet.

3. Energieerzeugungsvorrichtung (100) mit begrenzter Laufzeit nach Anspruch 1 oder 2, **dadurch gekennzeichnet, dass** das Betätigungselement (1) einen ersten Ruheanschlag (12) aufweist und das Zahnsegment (3) einen zweiten Ruheanschlag (33) aufweist, der so angeordnet ist, dass er in der Ruheposition des mindestens einen elastischen Rückstellelements (2) auf den ersten Ruheanschlag (12) aufliegt.

4. Energieerzeugungsvorrichtung (100) mit begrenzter Laufzeit nach einem der Ansprüche 1 bis 3, **dadurch gekennzeichnet, dass** der erste Anschlag (11) von einem ersten Zapfen (10) getragen wird, der Teil des Betätigungselements (1) ist, und dass der zweite Anschlag (32) von einem zweiten Zapfen (30) getragen wird, der Teil des Zahnsegments (3) ist.

5. Energieerzeugungsvorrichtung (100) mit begrenzter Laufzeit nach den Ansprüchen 3 und 4, **dadurch gekennzeichnet, dass** der erste Ruheanschlag (12) von dem ersten Zapfen (10) getragen wird, der Teil des Betätigungselements (1) ist, und dass der zweite Ruheanschlag (33) von dem zweiten Zapfen (30) getragen wird.

6. Energieerzeugungsvorrichtung mit begrenzter Laufzeit (100) nach einem der Ansprüche 1 bis 5 und nach Anspruch 2, **dadurch gekennzeichnet, dass** die Vorrichtung (100) einen Rücklaufschutzmechanismus umfasst, der in der Warteposition verhindert, dass das Betätigungselement (1) durch das mindestens eine elastische Rückstellelement (2) angetrieben wird.

7. Energieerzeugungsvorrichtung mit begrenzter Laufzeit (100) nach Anspruch 6, **dadurch gekennzeichnet, dass** der Rücklaufschutzmechanismus mindestens einen Rastkranz (5) umfasst, der in der Warteposition den Antrieb des Betätigungselements (1) durch das mindestens eine elastische Rückstellelement (2) verhindert.

8. Energieerzeugungsvorrichtung (100) mit begrenzter Laufzeit nach einem der Ansprüche 1 bis 7, **dadurch gekennzeichnet, dass** das mindestens eine elastische Rückstellelement (2) so angeordnet ist, dass es bei einem Anhalten des Antriebs des Betätigungselements (1) durch den Benutzer das Zahnsegment (3) relativ zum Betätigungselement (1) zurückdrückt und in seine eigene Ruheposition zurückkehrt.

9. Energieerzeugungsvorrichtung mit begrenzter Laufzeit (100) nach einem der Ansprüche 1 bis 8, **dadurch gekennzeichnet, dass** das mindestens eine elastische Rückstellelement (2) eine Schraubenfeder ist, die auf Druckbelastung ausgelegt ist.

10. Energieerzeugungsvorrichtung mit begrenzter Laufzeit (100) nach einem der Ansprüche 1 bis 9, **dadurch gekennzeichnet, dass** das Zahnorgan (3) eine Verzahnungsfläche (34) aufweist, die mit einem um eine Nebenachse (DS) drehbar gelagerten Zahnrad (40) zusammenwirkt, das Teil eines Getriebes (4) ist, um die elektrische Generatoreinheit (6) anzutreiben, wenn das Zahnorgan (3) durch das mindestens eine elastische Rückstellelement (2) in Bewegung gesetzt wird.

11. Uhrwerk (1000), das mindestens einen elektrischen Generator (6) zur Stromversorgung von mindestens einem Stromkreis (7) umfasst, **dadurch gekennzeichnet, dass** das Uhrwerk (1000) mindestens eine Energieerzeugungsvorrichtung mit begrenzter Laufzeit (100) gemäß einem der Ansprüche 1 bis 10 aufweist, die zum Antrieb des mindestens einen elektrischen Generators (6) vorgesehen ist.

12. Uhrwerk (1000) nach Anspruch 11, **dadurch gekennzeichnet, dass** das Uhrwerk (1000) keine Einrichtung zur Speicherung elektrischer Energie aufweist.

13. Uhrwerk (1000) nach Anspruch 11 oder 12, **dadurch gekennzeichnet, dass** es sich bei dem Uhrwerk (1000) um eine Uhr handelt.

## Claims

1. Time-limited power generation device (100) for a timepiece (1000), including a manoeuvring member (1) manoeuvrable by a user against at least one elastic return means (2), which at least one elastic return means (2) is arranged to drive indirectly at least one electric generator (6) for generating an electric current for a limited period, wherein said device (100) includes a toothed member (3) movable with a degree of freedom relative to said manoeuvring member (1) and delimiting with said manoeuvring member (1) a separate chamber (20) for receiving each said elastic return means (2), which said elastic return means (2) is held compressed in its said chamber (20) between a pre-stressed position of rest and a position of maximum compression, between on the one hand a first support banking (11) that includes said manoeuvring member (1) and on the other hand a second support banking (32) that includes said toothed member (3), and wherein said toothed member (3) is arranged to be driven by said at least one elastic return means (2) for driving said electric generator (6) directly or indirectly through a geartrain (4), **characterised in that** said manoeuvring member (1), said at least one elastic return means (2), and said toothed member (3), are movable in rotation about a common main axis (DP) and **in that** said manoeuvring member (1) is a movable bezel mobile relative to a middle (8, 9).

2. Time-limited power generation device (100) according to claim 1, **characterised in that** in the absence of action by a user on said manoeuvring member (1), and in the absence of relaxation of said at least one elastic return means (2), said device (100) occupies a standby position in which said toothed member (3) is in a position of abutment against said manoeuvring member (1), and each said elastic return means (2) is in said pre-stressed position of rest in its respective chamber (20).

3. Time-limited power generation device (100) according to claim 1 or 2, **characterised in that** said manoeuvring member (1) includes a first rest banking (12), and **in that** said toothed member (3) includes a second rest banking (33) which is arranged to cooperate in abutment with said first rest banking (12) in said position of rest of said at least one elastic return means (2).

4. Time-limited power generation device (100) according to any of claims 1 to 3, **characterised in that** said first support banking **(11)** is supported by a first catch (10) that includes said manoeuvring member (1) and **in that** said second support banking (32) is supported by a second catch (30) that includes said toothed member (3).

5. Time-limited power generation device (100) according to claims 3 and 4, **characterised in that** said first rest banking (12) is supported by said first catch (10) that includes said manoeuvring member (1) and **in that** said second rest banking (33) is supported by said second catch (30).

6. Time-limited power generation device (100) according to any of claims 1 to 5 and according to claim 2, **characterised in that** said device (100) includes a non-return mechanism arranged to prevent, in said standby position, the driving of said manoeuvring member (1) by said at least one elastic return means (2).

7. Time-limited power generation device (100) according to claim 6, **characterised in that** said non-return mechanism includes at least one toothed ring (5) opposing in said standby position, the driving of said manoeuvring member (1) by said at least one elastic return means (2).

8. Time-limited power generation device (100) according to any of claims 1 to 7, **characterised in that** said at least one elastic return means (2) is arranged, when said manoeuvring member (1) is stopped by the user to push said toothed member (3) away from said manoeuvring member (1), and return to its own said position of rest.

9. Time-limited power generation device (100) according to any of claims 1 to 8, **characterised in that** said at least one elastic return means (2) is a helicoidal spring arranged to work in compression.

10. Time-limited power generation device (100) according to any of claims 1 to 9, **characterised in that** said toothed member (3) includes a toothed surface (34) arranged to cooperate with a gear pinion (40), rotatable about a secondary axis (DS), and that includes said geartrain (4), for driving said electric generator (6), when said toothed member (3) is driven by said at least one elastic return means (2).

11. Timepiece (1000) including at least one electric generator (6) for the power supply of at least one circuit (7), **characterised in that** said timepiece (1000) includes at least one time-limited power generation device (100) according to any of claims 1 to 10 arranged for driving said at least one electric generator (6).

12. Timepiece (1000) according to claim 11, **characterised in that** said timepiece (1000) has no means for storing electrical energy.

13. Timepiece (1000) according to claim 11 or 12, **characterised in that** said timepiece (1000) is a watch.
